# EUROPEAN PATENT SPECIFICATION

(11) **EP 1 242 722 B1**
(45) Date of publication and mention of the grant of the patent: **25.01.2006**
(21) Application number: 00985467.0
(22) Date of filing: 07.12.2000
(51) Int. Cl.: F01N 7/02, F01N 3/28, F16L 23/028

(54) **APPARATUS FOR TREATMENT OF EXHAUST GAS**
VORRICHTUNG ZUR BEHANDLUNG VON ABGAS
APPAREIL DE TRAITEMENT DE GAZ D'ECHAPPEMENT

(30) Priority: 07.12.1999 GB 9928855
(43) Date of publication of application: 25.09.2002
(73) Proprietor: Eminox Limted, Gainsborough, Lincolnshire DN21 2TU (GB)
(72) Inventor: GAULT, Anthony, John, Gainsborough, Lincolnshire DN21 2TR (GB)
(74) Representative: McLean, Robert Andreas
(86) International application number: PCT/GB2000/004660
(87) International publication number: WO 2001/042633

(56) References cited:
- DE-A- 19 728 655
- US-A- 5 887 750
- PATENT ABSTRACTS OF JAPAN vol. 1997, no. 06, 30 June 1997 (1997-06-30) & JP 09 053772 A (SHIZUSEI KOGYO KK), 25 February 1997 (1997-02-25)

## Description

The present invention relates to an apparatus, notably to a gas treatment chamber for treating the exhaust gases of an internal combustion engine for motor vehicles and other applications.

### BACKGROUND TO THE INVENTION:

Diesel engine exhaust gases contain a number of noxious gases, such a nitrogen oxides, sulphur oxides and carbon oxides, as well as un-burnt hydrocarbons, carbon and other particles. The amount of sulphur oxides in the exhaust gases is dependent primarily upon the sulphur in the fuel and is controlled by the quality of the initial crude oil and the refining techniques used in the preparation of the fuel. However, the other materials can be treated so as to render them less obnoxious. It is therefore common practice to pass the exhaust gases through one or more treatment chambers containing a catalytic converter in which the lower nitrogen oxides are converted to NO₂. The particulates are removed from the exhaust gas stream by a metal gauze or mesh or a ceramic filter element. The NO₂ and oxygen in the gas stream react with the carbon particulates trapped in the filter element to form carbon dioxide, which is then discharged with the other exhaust gases. If desired, the filtered gases can be subjected to reduction of remaining nitrogen oxides to nitrogen by injecting urea into the gas stream after it leaves the filter element but before it leaves the silencer unit. The treated gas stream is then passed over an oxidising catalyst to convert residual ammonia from the urea to nitrogen and water, which are acceptable exhaust emissions. The net result is a typical reduction in noxious components of the exhaust gases of over 90%.

Such treatment chambers are typically built on a modular basis as a series of generally cylindrical units, each containing one of the desired operating elements of the treatment. Typically, each module comprises the operating element as a cylindrical body surrounded by a shock absorbent ceramic sleeve, located by internal circumferential annular ribs or flanges within a metal, usually stainless steel, sleeve. Thus, one module contains the catalyst carried on a foraminous ceramic or other support or as a wire mesh through which the exhaust gases pass. A second module contains the cast porous or fritted ceramic filter which traps the particulate material and upon which those particles burn in the presence of the NO₂ formed within the catalyst module. Other modules can be used for other treatments, for example the injection of urea; and additionally the modules will also serve to attenuate the noise emitted by the engine which the modules serve.

In addition to allowing the designer greater flexibility in designing the treatment chambers to achieve optimum treatment of the exhaust gasses, the use of a modular construction enables the operator to remove one or more of the modules for cleaning and servicing or replacement. For example, it has been found that the performance of the filter module can be prolonged if the module is removed and reversed.

Such modules are preferably secured together as an axial series of components by releasable joint mechanisms in which outwardly extending radial flanges at opposed ends of adjacent modules are secured together with a compressible gasket forming a gas-tight seal between the opposed faces of the flanges. The flanges are secured together by any suitable means. For example, the flanges can be bolted together by a circumferential series of bolts. However, this is cumbersome and the accepted method for securing the flanges together, whilst retaining ease of dismantling the joint, is to form the flanges as opposed axially inclined radial outwardly directed shoulders and to apply a V section strap with a circumferentially acting clamp upon the shoulders of two adjacent modules. Upon tightening of the clamps, the straps contract radially upon the taper of the shoulders and thus lock the modules together and clamp the shoulders axially upon a gasket located between them to form a gas-tight joint between the modules. Silencers incorporating treatment chambers using such a modular construction are commercially available from the Applicants under the Trade Mark Greencat. For convenience, the term silencer will be used hereinafter to denote in general chambers for the treatment of exhaust gases to remove noxious materials from the gas stream and which also by design or coincidentally attenuate the noise from the combustion of fuel in a internal combustion engine.

However, problems have been encountered in some applications in that the radial flanges and clamping effectively increase the dimensions of the silencer and may thus restrict the locations at which the silencer can be mounted on a vehicle. To date no satisfactory answer to this problem has been devised which retains the modular construction of the silencer and the ease of dismantling of the joints in the silencer which is an important feature of the silencer.

We have now devised a form of joint, which reduces the above problem.

### SUMMARY OF THE INVENTION:

Accordingly, the present invention provides a modular system for the treatment of the exhaust gases of an internal combustion engine, which system comprises a series of compartments each including a hollow housing body member within which one or more treatments are to be performed on a gas stream passing therethrough, at least two adjacent compartments having housing body members carrying opposed circumferential outwardly directed radial flanges at or adjacent the adjacent ends thereof whereby the compartments can be secured to one another, the radial flanges presenting an annular face directed axially towards the housing body of the compartment which face is inclined axially away from the housing body member, characterised in that a terminal portion of at least one end of the housing body member has been in-folded radially inwardly to form an internally directed annular shoulder, and then outwardly to form a radially outwardly directed flange integral with the internal shoulder such that the radial flange is recessed substantially wholly within the radial dimensions of the adjacent portion of the housing member.

The invention also provides an internal combustion engine provided with such a system and a compartment suitable for use in such a system.

The invention also provides a method for fabricating the radial flange on a housing body member of a compartment described above, characterised in that it comprises in-folding at least one of the terminal portions of the housing body member by applying radially inwardly directed pressure to the wall of the housing body member at a number of points circumferentially around the terminal portion of the housing body member.

Preferably, the flanges are formed integrally with the housing body member by folding the wall material of the terminal portion of the body member initially radially inwardly to form an internally directed annular shoulder and then outwardly to form the radially outwardly directed flange. Preferably, such flanges are formed at each end of the housing body member so that each compartment of the silencer can be secured to adjacent compartment(s) using a jointing system of the invention.

By forming the radial flanges recessed within the radial dimensions of the housing body members, the joints securing the compartments together do not project significantly radially, thus overcoming the problem with the present form of silencer jointing systems. However, the joint retains the ease of dismantling offered by the use of the circumferential V strap and circumferential clamps. The preferred form of the flange construction offers the unexpected and additional advantage that the initial radially inwardly directed shoulder provides an internal stop for use in limiting movement of the treatment elements axially within the silencer body, replacing the additional annular internal flanges welded within the housing member used hitherto to provide this internal stop.

For convenience, the invention will be described hereinafter in terms of a generally cylindrical housing body member made from stainless steel and having the flanges of the invention formed at each end thereof. Typically such housings contain a cylindrical core of the treatment element appropriate to the treatment which is to be carried out in that module of the silencer. Thus, the housing will usually contain a cylindrical core of a ceramic support carrying the catalyst dip coated or vapour deposited within the passages thereof, or a filter core having a plurality of axial bores closed at alternate ends so as to provide a tortuous path for gas through the filter element. Such cores, their design and manufacture can be of conventional nature. The cores are typically surrounded by a ceramic shock absorbing material, for example that sold under the Trade Mark Interam. The housing member is typically made by compressing a split cylinder of stainless steel strip around a sleeve of the shock absorbent material encasing the treatment element so as to form the cylindrical housing around the internal components, and securing the butting edges of the strip together. Such techniques can be carried out using any suitable technology and produce a housing body member containing the treatment element secured radially within the tubular housing. The treatment elements can be secured against axial movement within the housing by providing one or more inwardly directed flanges or ribs against which the exposed terminal portions of the treatment elements. However, as indicated above, the formation of the recessed flanges of the present invention forms an initial radially inwardly directed shoulder which can serve as the stop which restrains the axial movement of the treatment element within the housing.

For convenience, the invention will be described hereinafter in terms of a module comprising a generally cylindrical stainless steel tubular housing body member formed about a cylindrical treatment element and an interface layer or layers of a ceramic shock absorbing material between the tubular housing and the treatment element, the axially exposed transverse ends faces or a portion thereof being in butting engagement with the radially inwardly directed shoulder of the recessed joint of the invention at each end of the tubular housing member. If desired, an annular metal mesh gasket or other deformable thermally stable material may be incorporated as a compressible interface between the axially exposed terminal face of the treatment element and the opposed shoulder in the tubular housing member.

The recessed joint comprises two components, a radially inwardly directed proximal portion and a radially outwardly directed inclined distal portion upon which the V strap is to be located. The radial extent of the two portions need not be the same and the proximal portion may extend radially further than the distal portion so that the circumferential periphery of the distal portion is inset within the radial dimensions of the housing member. However, the deeper this periphery is set into the housing, the more difficult it is for an operator to apply a spanner, Allen key or other tool to the clamps to secure the V strap in position. It is therefore preferred that the proximal portion extend for substantially the same radial distance or up to 10% more than the radial extension of the distal portion.

The proximal portion is conveniently formed by applying a radially inwardly directed pressure to the terminal portion of the tubular housing member so as to fold the wall of the housing inwardly. Preferably, the pressure is applied at a plurality of points around the circumference of the tubular housing by a plurality of former pieces urged radially inwardly by one or more hydraulic rams or the like. It is especially preferred to stand the tubular housing carrying the treatment element(s) therein upon a base plate so that the exposed rim of the tubular housing adopts a known relationship to radially acting pusher members carried by the base member. It may also be desired to rotate the tubular housing about its longitudinal axis so that a rolling radial deformation of the end of the tubular member takes place. Surprisingly, we have found that such a technique for forming the proximal in-folding of the end of the tubular housing enables the proximal portion to be achieved with a high degree of axial accuracy in positioning the in-fold or shoulder against which the treatment element within the tubular housing is to engage. If desired, the wall of the tubular housing member can be circumferentially scored or cut to assist formation of a sharp bend in the wall of the member. However, we have found that this is not usually necessary.

The extent of the angle of the in-fold achieved, relative to the longitudinal axis of the tubular member, will typically be about 90° so that the proximal portion forms a radial shoulder against which the exposed terminal portion of the treatment element engages. However, if desired, the in-fold may pass through more than 90° so that the in-folder portion of the tubular member engages and compresses an annular mesh or other gasket against the exposed terminal portion of the treatment element so as to clamp the treatment element axially within the bore of the tubular body member. Alternatively, the in-folding of the proximal portion of the tubular member may be through 30 to 90°, preferably from 60 to 85 - 90°.

The extent and shape of the in-folding of the proximal portion of the tubular member is determined primarily by the angle and shape of the face of the pressing tool applied to the tubular member. Typically, the pressing tool comprises a radially inward portion to support the inner surface of the wall of the tubular member and a corresponding outer portion, which is pressed radially inward against the wall of the tubular member.

The flange of the joint of the invention is formed by folding the distal portion of the tubular member, that is that portion adjacent the exposed axial end of the tubular member, radially outwardly. This out-fold can follow directly on from the in-folding of the proximal portion. However, it will usually be preferred to form an intermediate portion of approximately cylindrical form between the proximal and distal portions. This intermediate portion is one having a substantially uniform diameter, which is smaller than that of the full diameter of the tubular housing. It serves to provide axial space between the radially outwardly directed flange of the distal portion and the remainder of the tubular member. The optimum radial and axial dimensions for this intermediate portion can readily be determined by simple trial and error tests.

The radial flange of the joint of the invention is provided by out-folding the distal portion of the tubular member. The out-folding is typically carried out to form a flange which is angled at from 45 to 85°, preferably at from 60 to 80°, to the longitudinal axial of the tubular member so that the flange is angled away from the reminder of the tubular member to provide the tapered face against which the circumferential strap engages. If desired, the flange may be formed with an undercut circumferential groove, rib or step into which a corresponding portion of the strap engages so as to lock the strap upon the flange once it has been tightened sufficiently.

The out-folding of the distal portion of the tubular body can be achieved in a separate operation from the in-folding of the proximal portion using any suitable technique. However, it is preferred to perform the out-folding in the same operation as the in-folding of the proximal portion. This can readily be achieved by the use of appropriately shaped support and pusher blocks in the preferred method described above for forming the in-folding.

The out-folding of the distal portion of the tubular member may not form a wholly flat flange in which the flange is slightly bowed axially away from the remainder of the tubular member. In some forms of joint, this bowing of the surface of the flange can be used to provide an annular point loading during clamping of two opposed flanges together, assisting the formation of a gas-tight joint between the faces of the flanges.

In use, the silencer is made by placing the desired modules in end to end relationship to form the desired silencer configuration. The modules need not all be of the same axial length and more than one module achieving the same treatment of the gas stream passing through it may be used. The modules are then secured together by fitting a V section strap upon the circumferential crown of the peripheries of two adjacent flanges. The strap is typically a stainless steel strap, which has been axially folded to form a V channel and provided with terminal clamp members, which can be interlinked and then tightened. Such straps and clamp members can be those conventionally used in such joints. If desired, the clamp members can be made from a metal or alloy which expands differentially to the strap and the tubular member so that the clamp remains tight during heating of the silencer and strap during use, notably at temperatures in excess of 250°C, typically above 300 to 600°C, applications of the invention.

As stated above, the jointing system of the invention enables a silencer in which the joints do not project radially beyond the envelope of the tubular member to be produced. Since the proximal portion of the joint forms an integral inwardly directed shoulder to support the treatment elements against axial movement, it is not necessary to provide separate annular flanges and the like within the tubular member.

The invention has been described above in terms of the use of flanges and V section clamps which achieve a measure of axial clamping of the modules as the clamp is contracted radially. However, it will be appreciated that one of the flange and the internal surface of the clamp may extend substantially truly radially and the other is at an angle relative to the other to provide a relative taper between the opposing faces. The flange may thus be at 90° to the longitudinal axis of the module and the internal shape of the v clamp strap can provide the taper necessary to achieve axial clamping between two opposed modules.

The invention has been described above in terms of a silencer for use with a diesel engine. However, this invention can be applied to other forms of engine, for example a spark ignition engine, and the engine may be a stationary engine, for example in an electricity generating or an hydraulic fluid compression unit, or may be a marine engine. The invention can also be applied wherever it is desired to form a modular unit for the treatment of a gas stream, for example in the treatment of exhaust gases from a coal burning furnace or the emissions from a LPG powered engine.

### DESCRIPTION OF THE DRAWINGS:

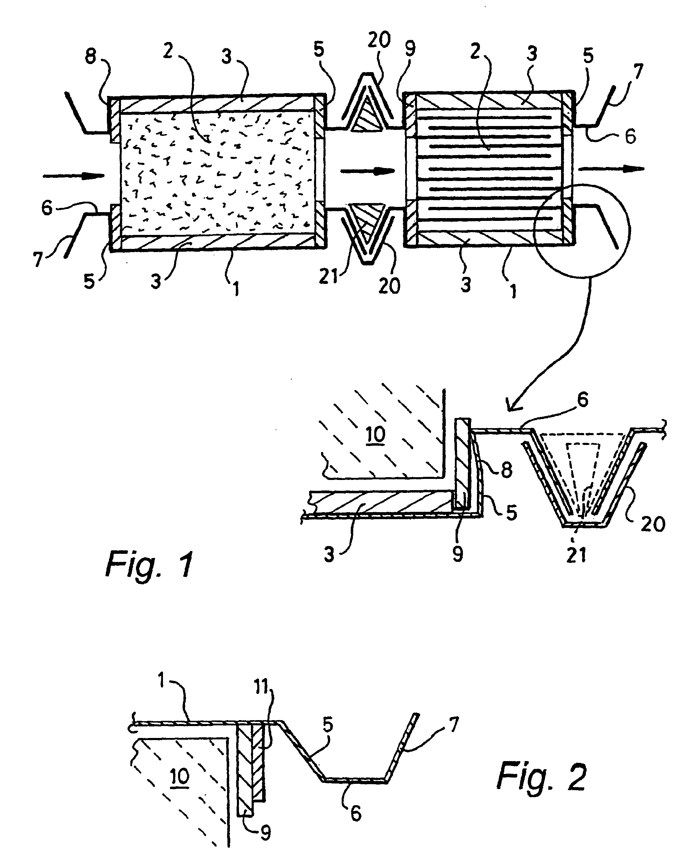

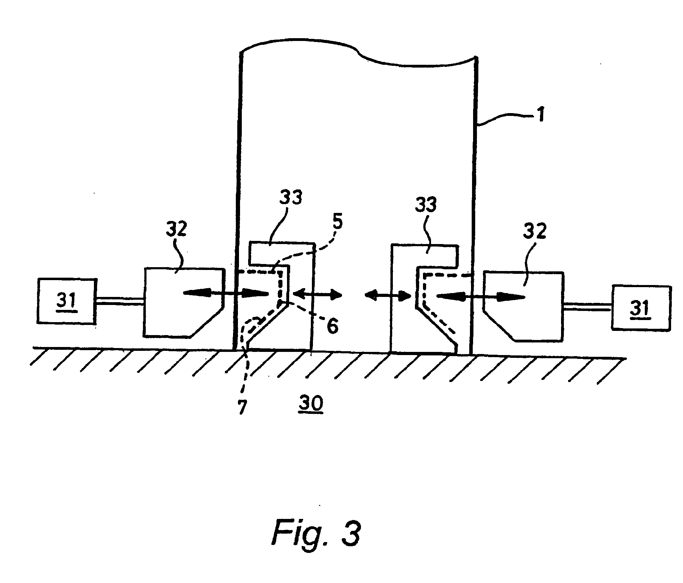

A preferred form of the joint of the invention will now be described by way of illustration with respect to a silencer as shown in the accompanying drawings, in which Figure 1 a an axial section through the silencer; Figure 2 shows an alternative form of the joint for use in the silencer of Figure 1; and Figure 3 is a diagrammatic representation of a machine for forming the joints of the invention.

### DESCRIPTION OF THE PREFERRED EMBODIMENT:

The silencer comprises two or more modules each comprising a tubular housing body member 1, containing a substantially cylindrical treatment element 2 surrounded by a sleeve 3 of the ceramic shock absorbent material sold under the Trade Mark Interam.

For example, in one tubular housing body member is located a foraminous ceramic frit core carrying a Rhodium/Platinum catalyst deposited on the exposed surfaces within the core; in another tubular housing body member is located a cast or extruded ceramic filter element having a plurality of axial passages therein alternatively open to each end of the element and being formed from a porous ceramic so that the flow path for gas through the filter element is tortuous.

Each end of the tubular member 1 is formed with an in-folded portion 5, an intermediate axial portion 6 and an out-folded angled flange 7. As shown in Figure 1, the portion 5 can be in-folded through an angle of 90° or more so as to form an annular shoulder 8 within the tubular member which axially engages an annular gasket 9 and bears against the end of the treatment element 10 in the tubular member so as to retain the element 10 against axial movement within the tubular member. Alternatively, as shown in Figure 2, the portion 5 can be in-folded through less than 90°, in which case it may be necessary to provide separate internal annular flanges 11 within tubular member to retain the elements 10.

The modules of the silencer are secured together by applying a strap 20 having an internal V section around and upon the crown of the opposed flanges 7, which have an annular gasket 21 between the opposed faces of the flanges 7. By virtue of the internal angle of V cross section of the strap and the angle of inclination of the flange 7, when the strap 20 is tightened by circumferentially acting clamps (not shown), the straps 20 will tighten radially upon the flanges 7 and draw them together axially upon gasket 21 to form a gas-tight joint between the modules.

As shown in Figure 3, the in-folding and out-folding of the portions 5 and 7 of the joints can be readily achieved with a surprising degree of accuracy by mounting the tubular member 1 upright with one end on a base table 30. The table is provided with a plurality, for example 12 to 15, of radially acting hydraulic rams 31 symmetrically located about the circumference of member 1. Each ram carries a shaper end piece 32 corresponding to the desired radially external shape of the joint. Within tubular member 1 are located a corresponding series of support pieces 33 against which the shaper pieces 32 press the material of the tubular member 1 to form the desired shape of the joint. If desired, the action of the shaper pieces 32 can be two step so as to form the in-fold portion 5 and the intermediate portion 6 initially; and subsequently to form the out-folded flange 7. The support pieces 33 may also be retracted radially inwardly so as to permit easy removal of the shaped end of the tubular member 1 from the machine. Such a machine can readily be adapted manufacture a range of joints on tubular members of different diameters merely by changing the shaping and support pieces 32 and 33.

Whilst the invention has been described above in terms of a substantially circular cross section body member, it will be appreciated that other forms of cross section shape may be used, for example elliptical or oval, where the material of the strap 21 is sufficiently flexible to conform to the shape of the body member to achieve a gas tight seal between the opposed flanges of adjacent body members.

## Claims

1. A modular system for the treatment of the exhaust gases of an internal combustion engine, which system comprises a series of compartments each including a hollow housing body member (1) within which one or more treatments are to be performed on a gas stream passing therethrough, at least two adjacent compartments having housing body members carrying opposed circumferential outwardly directed radial flanges (7) at or adjacent the adjacent ends thereof whereby the compartments can be secured to one another, the radial flanges (7) presenting an annular face directed axially towards the housing body (1) of the compartment which face is inclined axially away from the housing body member (1), **characterised in that** a terminal portion of at least one end of the housing body member (1) has been in-folded radially inwardly to form an internally directed annular shoulder (8), and then outwardly to form a radially outwardly directed flange (7) integral with the internal shoulder (8) such that the radial flange (7) is recessed substantially wholly within the radial dimensions of the adjacent portion of the housing member (1).

2. A system as claimed in claim 1, **characterised in that** the housing body member (1) contains a treatment element (2) for subjecting a gas passing through the element to a treatment and **in that** the treatment element (2) is restrained against axial movement within the housing body member (1) by engagement with the internally directed shoulder (8) of the housing body member (1).

3. A system as claimed in claim 2, **characterised in that** the in-folding of the terminal portion of the housing body member (1) to form the inwardly directed shoulder (8) passes through 90° or more so that the internal shoulder (8) bears against the transverse exposed end face of the treatment element (2).

4. A system as claimed in any one of the preceding claims, **characterised in that** the radial flange (7) is out-folded at an angle of from 45 to 85° to the longitudinal axis of the housing body member (1).

5. An system as claimed in any one of the preceding claims, **characterised in that** the compartments are clamped together in end to end axial arrangement by circumferential clamping members (20) engaging the radial flanges (7) of housing body members of two adjacent compartments.

6. A system as claimed in claim 5, **characterised in that** the clamping members (20) a provided with an inwardly directed V section channel which locates upon the radially outward lips of two adjacent radial flanges (7) and is contracted radially by tensioning the clamping member (20) circumferentially.

7. An internal combustion engine provided with a system as claimed in any one of the preceding claims for the treatment of the exhaust gasses from the engine.

8. A compartment for use in a modular system as claimed in any of claims 1 to 6, the compartment including a housing body member (1) having a circumferential outwardly directed radial flange (7) at or adjacent an end thereof, the radial flanges (7) presenting an annular face directed axially towards the housing body (1) of the compartment which face is inclined axially away from the housing body member (1), **characterised in that** the radial flange (7) is recessed substantially wholly within the radial dimensions of the adjacent portion of the housing member (1).

9. A method for fabricating the radial flange on a housing body member of a compartment as claimed in claim 8, **characterised in that** it comprises in-folding at least one of the terminal portions of the housing body member by applying radially inwardly directed pressure to the wall of the housing body member (1) at a number of points circumferentially around the terminal portion of the housing body member.

10. A method as claimed in claim 9, **characterised in that** the pressure is applied by a plurality of former members (32) urged radially inwardly by one or more hydraulic rams (31).

## Patentansprüche

1. Modulares System zur Behandlung der Abgase eines Verbrennungsmotors, das eine Reihe von Kammern umfasst, die jeweils ein hohles Gehäusekörperglied (1) enthalten, in dem eine oder mehrere Behandlungen an einem dort hindurch strömenden Gasstrom durchgeführt werden sollen, wobei mindestens zwei benachbarte Kammern Gehäusekörperglieder aufweisen, die einander gegenüberliegende, nach außen gerichtete radiale Umfangsflansche (7) an oder neben den benachbarten Enden davon aufweisen, wodurch die Kammern aneinander befestigt werden können, wobei die radialen Flansche (7) eine ringförmige Fläche aufweisen, die axial zum Gehäusekörper (1) der Kammer gerichtet ist, wobei die Fläche axial vom Gehäusekörperglied (1) weg geneigt ist, **dadurch gekennzeichnet, dass** ein Endteil mindestens eines Endes des Gehäusekörperglieds (1) radial nach innen einwärts gefaltet worden ist, um eine nach innen gerichtete ringförmige Schulter (8) zu bilden, und dann nach außen, um einen radial nach außen gerichteten, mit der inneren Schulter (8) integralen Flansch (7) zu bilden, so dass der radiale Flansch (7) im Wesentlichen vollständig innerhalb der Radialabmessungen des benachbarten Teils des Gehäuseglieds (1) eingelassen ist.

2. System nach Anspruch 1, **dadurch gekennzeichnet, dass** das Gehäusekörperglied (1) ein Behandlungselement (2) enthält, um ein das Element durchströmendes Gas einer Behandlung auszusetzen, und dass das Behandlungselement (2) gegen Axialbewegung im Gehäusekörperglied (1) durch Eingriff mit der nach innen gerichteten Schulter (8) des Gehäusekörperglieds (1) gegen Axialbewegung zurückgehalten wird.

3. System nach Anspruch 2, **dadurch gekennzeichnet, dass** das Einwärtsfalten des Endteils des Gehäusekörperglieds (1) zur Bildung der nach innen gerichteten Schulter (8) über mindestens 90° erfolgt, so dass die innere Schulte (8) an der freiliegenden Endquerfläche des Behandlungselements (2) anliegt.

4. System nach einem der vorhergehenden Ansprüche, **dadurch gekennzeichnet, dass** der radiale Flansch (7) in einem Winkel von 45 bis 85° zur Längsachse des Gehäusekörperglieds (1) nach außen gefaltet ist.

5. System nach einem der vorhergehenden Ansprüche, **dadurch gekennzeichnet, dass** die Kammern durch Umfangsklemmglieder (20), die die radialen Flansche (7) der Gehäusekörperglieder von zwei benachbarten Kammern in Eingriff nehmen, in einer axialen Ende-an-Ende-Anordnung zusammengeklemmt werden.

6. System nach Anspruch 5, **dadurch gekennzeichnet, dass** die Klemmglieder (20) mit einem nach innen gerichteten, einen V-förmigen Querschnitt aufweisenden Kanal versehen sind, der auf den sich radial nach außen erstreckenden Lippen zweier benachbarter radialer Flansche (7) angeordnet ist und durch Festziehen der Klemmglieder (20) um den Umfang radial zusammengezogen wird.

7. Verbrennungsmotor, der mit einem System nach einem der vorhergehenden Ansprüche zur Behandlung der Abgase von dem Motor versehen ist.

8. Kammer zur Verwendung in einem modularen System nach einem der Ansprüche 1 bis 6, wobei die Kammer ein Gehäusekörperglied (1) mit einem nach außen gerichteten, radialen Umfangsflansch (7) an oder neben einem Ende davon aufweist, wobei die radialen Flansche (7) eine ringförmige Fläche aufweisen, die axial zum Gehäusekörper (1) der Kammer gerichtet ist, wobei die Fläche axial von dem Gehäusekörperglied (1) weg geneigt ist, **dadurch gekennzeichnet, dass** der radiale Flansch (7) im Wesentlichen vollständig innerhalb der Radialabmessungen des benachbarten Teils des Gehäuseglieds (1) eingelassen ist.

9. Verfahren zur Herstellung des radialen Flansches an einem Gehäusekörperglied einer Kammer nach Anspruch 8, **dadurch gekennzeichnet, dass** es das Einwärtsfalten mindestens eines der Endteile des Gehäusekörperglieds durch Anlegen eines radial nach innen gerichteten Drucks an die Wand des Gehäusekörperglieds (1) an mehreren Stellen um den Umfang des Endteils des Gehäusekörperglieds umfasst.

10. Verfahren nach Anspruch 9, **dadurch gekennzeichnet, dass** der Druck durch mehrere Formerglieder (32) angelegt wird, die durch einen oder mehrere Hydraulikzylinder radial nach innen gedrückt werden.

## Revendications

1. Système modulaire pour le traitement des gaz d'échappement d'un moteur à combustion interne, lequel comprend une série de compartiments comprenant chacun un élément de corps de logement creux (1) dans lequel un ou plusieurs traitements doivent être réalisés sur un écoulement de gaz le traversant, au moins deux compartiments adjacents ayant des éléments de corps de logement portant des collerettes radiales circonférentielles opposées (7) dirigées vers l'extérieur au niveau de leurs extrémités adjacentes ou près de celles-ci, de façon à pouvoir fixer l'un à l'autre, les collerettes radiales (7) présentant une face annulaire dirigée axialement vers le corps du logement (1) du compartiment, laquelle face est inclinée axialement en s'écartant de l'élément de corps du logement (1), **caractérisé en ce qu'**une partie terminale d'au moins une extrémité de l'élément de corps du logement (1) a été repliée radialement vers l'intérieur pour former un épaulement annulaire (8) dirigé vers l'intérieur, puis vers l'extérieur pour former une collerette (7) dirigée vers l'extérieur radialement d'un seul tenant avec l'épaulement intérieur (8), de telle manière que la collerette radiale (7) est sensiblement complètement en retrait à l'intérieur des dimensions radiales de la partie adjacente de l'élément de logement (1).

2. Système selon la revendication 1, **caractérisé en ce que** l'élément de corps de logement (1) contient un élément de traitement (2) pour soumettre un gaz traversant l'élément à un traitement, et **en ce que** le mouvement axial de l'élément de traitement (2) dans l'élément de corps de logement (1) est entravé par coopération avec l'épaulement dirigé vers l'intérieur (8) de l'élément de corps de logement (1).

3. Système selon la revendication 2, **caractérisé en ce que** le repliement vers l'intérieur de la partie terminale de l'élément de corps de logement (1) pour former l'épaulement dirigé vers l'intérieur (8) passe par 90° ou plus, de sorte que l'épaulement intérieur s'applique contre la face terminale exposée transversale de l'élément de traitement (2).

4. Système selon l'une quelconque des revendications précédentes, **caractérisé en ce que** la collerette radiale (7) est repliée vers l'extérieur à un angle de 45 à 85° par rapport à l'axe longitudinal de l'élément de corps de logement (1).

5. Système selon l'une quelconque des revendications précédentes, **caractérisé en ce que** les compartiments sont attachés ensemble dans une disposition axiale bout à bout par des éléments de serrage circonférentiels (20) venant en prise sur les collerettes radiales (7) des éléments de corps de logement de deux compartiments adjacents.

6. Système selon la revendication 5, **caractérisé en ce que** les éléments de serrage (20) sont munis d'un canal de section en V dirigé vers l'intérieur qui se place sur les lèvres radialement externes de deux collerettes radiales (7) adjacentes, et est contracté radialement en mettant en tension l'élément de serrage (20) circonférentiellement.

7. Moteur à combustion interne équipé d'un système selon l'une quelconque des revendications précédentes pour le traitement des gaz d'échappement du moteur.

8. Compartiment pour une utilisation dans un système modulaire selon l'une quelconque des revendications 1 à 6, le compartiment comprenant un élément de corps de logement (1) ayant une collerette radiale circonférentielle (7) dirigée vers l'extérieur au niveau ou près d'une extrémité de celui-ci, les collerettes radiales (7) présentant une face annulaire dirigée axialement vers le corps du logement (1) du compartiment, laquelle face est inclinée axialement en s'écartant de l'élément de corps de logement (1), **caractérisé en ce que** la collerette radiale (7) est sensiblement complètement en retrait à l'intérieur des dimensions radiales de la partie adjacente de l'élément de logement (1).

9. Procédé de fabrication de la collerette radiale sur un élément de corps de logement d'un compartiment selon la revendication 8, **caractérisé en ce qu'**il comprend le repliement vers l'intérieur d'au moins une des parties terminales de l'élément de corps de logement en appliquant une pression dirigée radialement vers l'intérieur à la paroi de l'élément de corps de logement (1) en un certain nombre de points circonférentiellement autour de la partie terminale de l'élément de corps de logement.

10. Procédé selon la revendication 9, **caractérisé en ce que** la pression est appliquée par une pluralité d'éléments de mise en forme (32) poussés radialement vers l'intérieur par un ou plusieurs vérins hydrauliques (31).
